Europäisches Patentamt

European Patent Office

Office européen des brevets

(11) Veröffentlichungsnummer: **0 204 988**
**B1**

(12) **EUROPÄISCHE PATENTSCHRIFT**

(45) Veröffentlichungstag der Patentschrift:
26.07.89

(21) Anmeldenummer: 86106608.2

(22) Anmeldetag: **15.05.86**

(51) Int. Cl.⁴: **F23R 3/00**, F23R 3/60

(54) Flammrohr.

(30) Priorität: **04.06.85  DE 3519938**

(43) Veröffentlichungstag der Anmeldung:
**17.12.86 Patentblatt 86/51**

(45) Bekanntmachung des Hinweises auf die Patenterteilung:
**26.07.89 Patentblatt 89/30**

(84) Benannte Vertragsstaaten:
**DE FR GB IT NL**

(56) Entgegenhaltungen:
**DE-A- 1 933 821**
**DE-A- 2 414 581**
**GB-A- 790 292**
**GB-A- 2 075 659**
**US-A- 4 432 207**
**US-A- 4 480 436**

(73) Patentinhaber: **MTU MOTOREN- UND TURBINEN-UNION MÜNCHEN GMBH, Dachauer Strasse 665 Postfach 50 06 40, D-8000 München 50(DE)**

(72) Erfinder: **Krüger, Wolfgang, Ing. grad., Waldstrasse 11, D-8069 Reichertshausen(DE)**

**Beschreibung**

Die Erfindung betrifft ein Flammrohr, insbesondere für Gasturbinenbrennkammern mit einer mantelartigen metallischen Wandung und einer unter Freilassung eines Zwischenraums darin angeordneten, aus Segmenten zusammengesetzten Auskleidung aus keramischem Werkstoff sowie mit an der metallischen Wandung befestigten Luftführungseinsätzen zur Luftzufuhr radial in das Flammrohr.

Aus der DE-A 1 933 821 ist ein solches Flammrohr für eine Gasturbinenbrennkammer bekannt.

Will man bei gleichbleibender Leistung von Verbrennungskraftmaschinen den Brennstoffverbrauch und die Umweltbelastung mindern, so ist eines der bekanntesten Mittel hierzu die Erhöhung der Prozeßtemperatur. Dies hat entsprechend auch höhere Temperaturen im Brennraum zur Folge, die sich in dem Bereich von 1800–2000 °K erstrecken. Bei derartigen Temperaturen wird auch ein keramischer Werkstoff eines Flammrohres hellglühend. Deshalb sind hochtemperaturfeste Werkstoffe, wie gesintertes Siliziumkarbid oder gesintertes und/oder heißgepreßtes Siliziumnitrid als Flammrohrwerkstoff verwendet worden.

Kritisch sind jedoch mechanische Verbindungsstellen solcher Flammrohre mit anderen aus Metall bestehenden Bauteilen. Dabei muß eine Übertragung von Wärme vom Flammrohr auf Bauteile aus Metallblech möglichst vermieden werden. Man hat versucht, dieses Problem durch Zwischenschalten einer Isolationsschicht zwischen Keramik und Metallblech oder durch Kühlung zu lösen. Es ergeben sich aber Schwierigkeiten aus der Wärmespeicherung und der Wärmedehnung einer solchen Isolationsschicht.

Aufgabe der Erfindung ist es deshalb, ein Flammrohr, insbesondere für Gasturbinenbrennkammern zu schaffen, welches einerseits hochtemperaturbeständig ist und andererseits eine Halterung im Gehäuse aufweist, die den vielfältigen, insbesondere thermischen Beanspruchungen eines rauhen Betriebs für eine ausreichende Zeit widersteht.

Gelöst wird diese Aufgabe durch die im Kennzeichnungsteil des Anspruchs 1 aufgeführten Merkmale.

Gegenüber dem eingangs beschriebenen vorbekannten Flammrohr wird durch die erfindungsgemäße Gestaltung eine besonders effektive, nämlich zweiseitige Kühlung der Haltebleche erzielt, und es wird dennoch insgesamt eine nur geringe Luftmenge als Kühlluft verbraucht, da ein wesentlicher Teil der Kühlluft als Verbrennungsluft dem Brennraum zugeführt wird. Durch die Ausbildung einer Zwischenwand aus den Halteblechen und die dadurch entstehenden konzentrisch ineinanderliegenden Zwischenräume kann darüber hinauz die Gefahr eines Thermoschocks der keramischen Segmente erheblich herabgesetzt werden.

Ein Ausführungsbeispiel der Erfindung mit weiteren Ausgestaltungen wird anhand der beigefügten Zeichnungen näher erläutert.

In den Zeichnungen zeigen:

Fig. 1 eine Rohr- oder Ringbrennkammer, teilweise im Schnitt,
Fig. 2 den Schnitt II–II gem. Fig. 1,
Fig. 3 die Einzelheit III aus Fig. 1,
Fig. 4 das Prinzip der Brennkammer mit Prallkühlung an den Halteblechen mit Ausschnittvergrößerung im Schnitt entsprechend Fig. 2,
Fig. 5 das Prinzip der Brennkammer mit Filmkühlung an den Halteblechen mit Ausschnittvergrößerung,
Fig. 6 die peripheren Stirnflächen der Auskleidungssegmente als Einzelheit (aus Fig. 4).

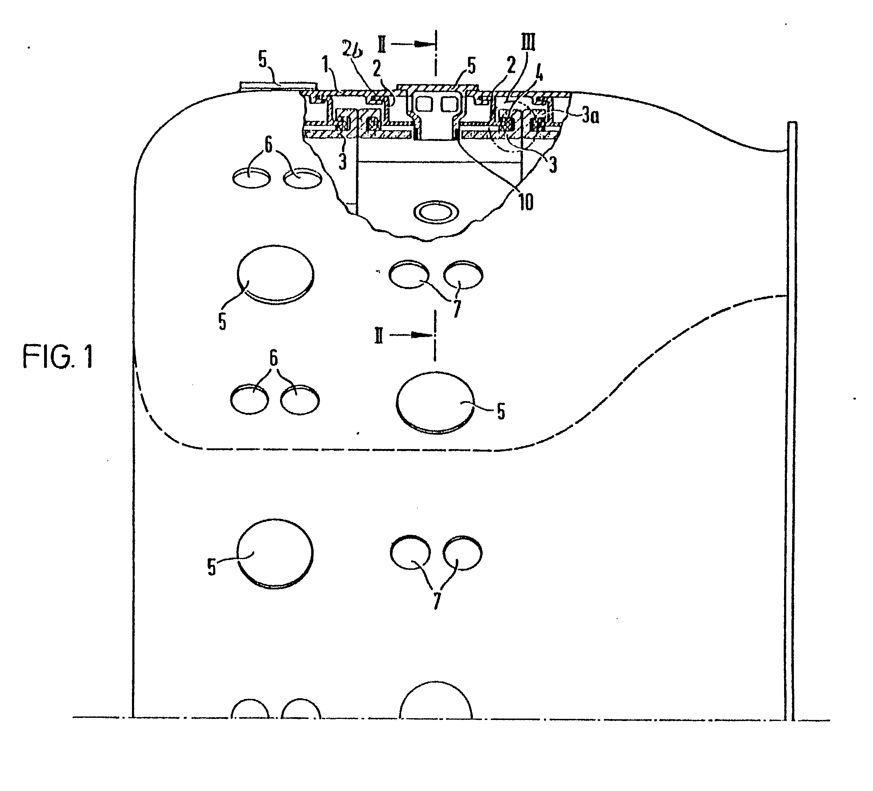

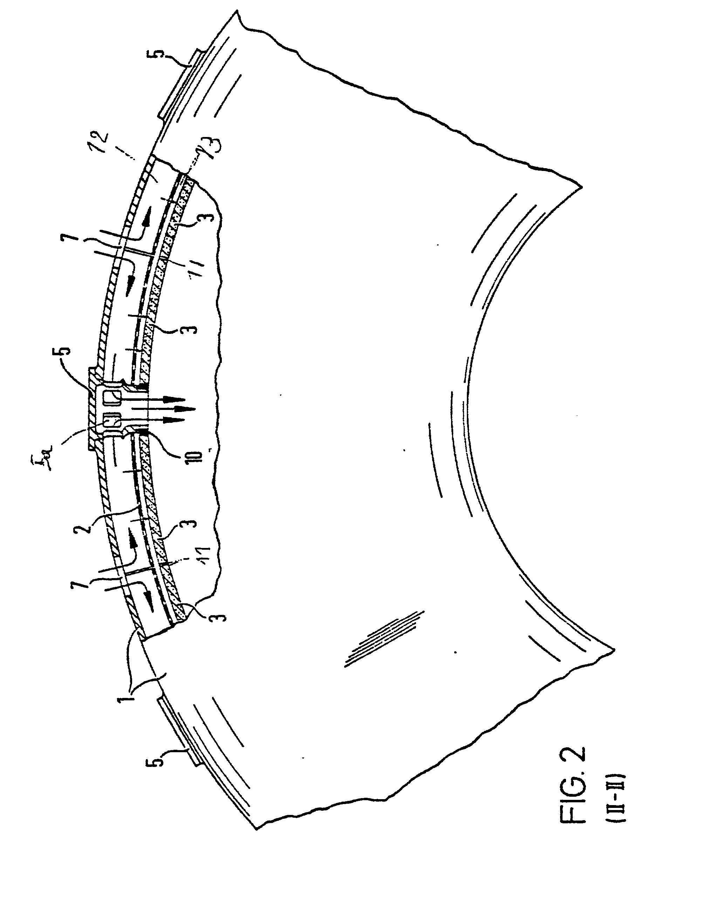

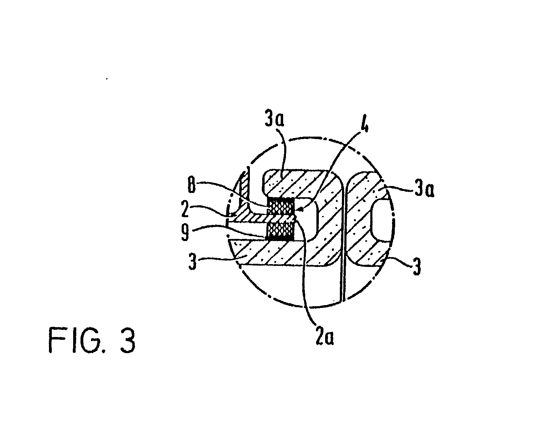

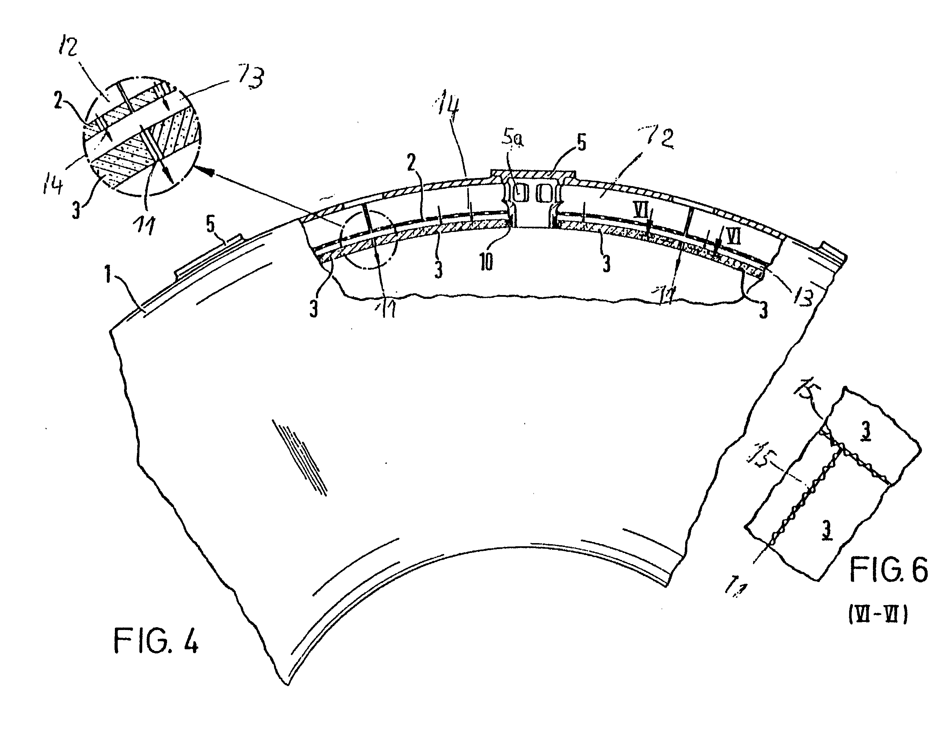

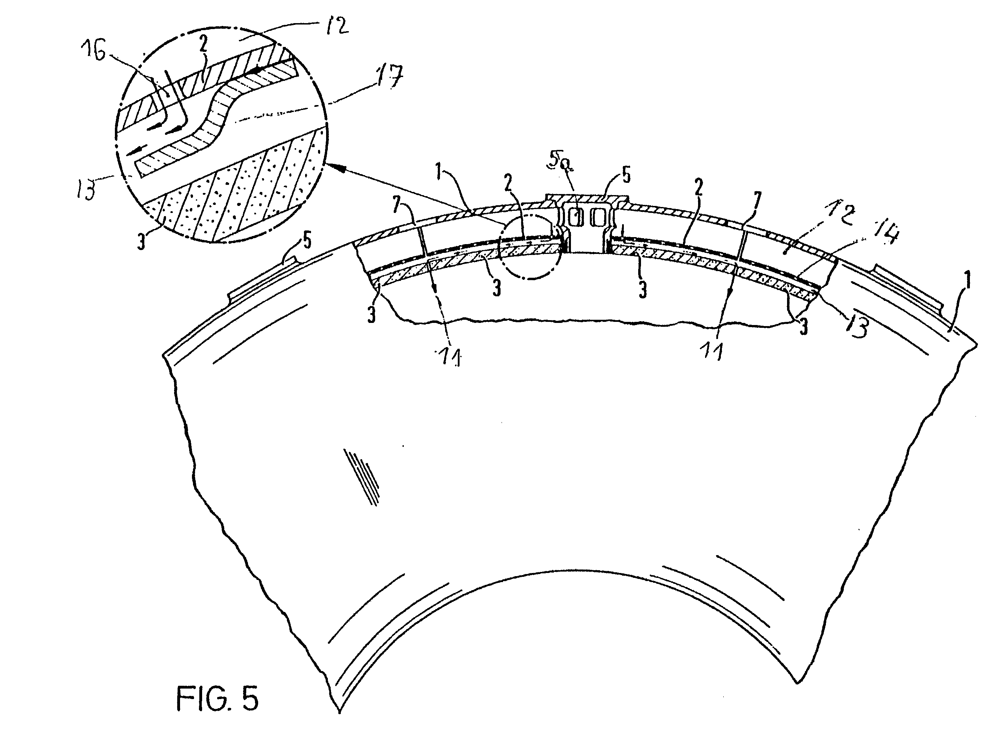

Wie Fig. 1 zeigt, ist ein Außengehäuse einer Rohr- oder Ringbrennkammer als metallische Wandung 1 ausführt, in die über Haltebleche 2 Auskleidungssemgnete 3 aus keramischem Werkstoff eingehängt sind. Die Auskleidungssegmente 3 sind in Ringsektoren geteilt (siehe Spalte 11 in Fig. 2). Diese bilden im Querschnitt U-förmige Kragen 3a aus und stoßen längsseits aneinander. Im Bereich des Kragens 3a umfassen sie jeweils einen Isolator 4 und zusammen mit diesem das freie Ende 2a eines Halteblechs 2. Das Ende 2a füllt, wie Fig. 3 zeigt, den Raum nicht völlig aus, sondern gestattet zeitliche Dehnbewegungen parallel zur Hauptachse der Ringbrennkammer. Wie aus der Einzelheit III gemäß Fig. 3 ersichtlich, besteht der Isolator 4 aus einem Drahtgeflecht oder Metallfilz 8, welcher mit einer Zirkonoxidspritzschicht 9 versehen sein kann. Das Halteblech 2 beabstandet die Auskleidungssegmente 3 zur metallischen Wandung 1, indem es bei 2b eingehängt ist. Jeweils mittig (quer zur Hauptachse) des einzelnen Auskleidungssegments 3 sind einzelne Rohrstutzen als Luftführungseinsätze 5 vorgesehen. Die Luftführungseinsätze 5 haben keine Berührung mit dem Auskleidungssegment 3. An den Durchtrittsstellen sind die Einsätze 5 mit einer Isolierschicht 10 versehen. Die Einsätze 5 sind in der metallischen Wandung 1 befestigt und vom Halteblech 2 lose umgeben. Sie sind außen geschlossen wie Stopfen. Das Halteblech 2 ist auf seiner dem Keramiksegment zugekehrten Seite mit einer reflektierenden Oberfläche versehen, insbesondere mit einer Aluminium- oder Silberschicht oder mit aufgedampftem Platin. Auf der dem Auskleidungssegment 3 abgeklärten Seite schafft der Abstand zur metallischen Wandung 1 einen Freiraum 12 in dem Luft den Halteblechen 2 zugeführt wird, entweder

a) radial nach dem Prinzip der Prallkühlung (Fig. 4) oder
b) tangential nach dem Prinzip der Filmkühlung (Fig. 5).

Die Luftzufuhr zur Brennkammer durch die Luftführungseinsätze 5 erfolgt durch Lochreihen 6 und 7 in der metallischen Wandung 1 und über Durchtrittsöffnungen 5a am Umfang der Einsätze 5.

Durch die erfindungsgemäßen Haltebleche 2 werden zwei etwa konzentrische Zwischenräume 12, 13 ausgebildet, wovon letzterer den keramischen Auskleidungssegmenten 3 benachbart ist. Der erste Zwischenraum 12 dient dem auf Abstand halten metallischer und keramischer Bauteile. Außerdem ist er Luftsammler und -Verteiler, indem der Hauptluftstrom durch die Löcher 6, 7 im Außengehäuse eintritt, peripher an den Halteblechen 2 auf deren radial außenliegender Seite entlang streicht und dann durch die Luftführungseinsätze 5 in die Brennkammer strahlartig eintritt.

Der zweite Zwischenraum 13 gibt nur einer vergleichsweise dünnen Luftschicht Raum. Die Luft tritt nach peripherem Entlangstreichen an der Außenseite der Halzbleche 2 durch viele kleine Eintrittslöcher 14 in nahezu senkrechter Richtung mit geringem Aufprall auf die radial äußere Wand der keramischen Auskleidungssegmente 3 in den Zwischenraum 13 ein. Sie gelangt als kleiner Nebenluftstrom an den peripheren Stirnseiten 11 der Ringsegmente 3 durch viele kleine Öffnungen 15 entlang der Trennfugen 11 in das Innere des Flammrohres (Fig. 6).

Die Luft kann in den Zwischenraum 13 auch dadurch gelangen, daß ein Nebenluftstrom gemäß Fig. 5 durch wenige Löcher 16 in der Nähe der Luführungseinsätze 5 eintritt und dann mittels Leitflächen 17 an der Innenseite der Halzbleche 2 als Film peripher entlanggeführt wird. Danach tritt die Luft durch die vielen kleinen Öffnungen an den Trennfugen 11, wie in Fig. 6 dargestellt, aus.

## Patentansprüche

1. Flammrohr, insbesondere für Gasturbinenbrennkammern, mit einer mantelartigen metallischen Wandung und einer unter Freilassung eines Zwischenraums darin angeordneten, aus Segmenten zusammengesetzten Auskleidung aus keramischem Werkstoff sowie mit an der metallischen Wandung befestigten Luftführungseinsätzen zur Luftzufuhr radial in das Flammrohr, dadurch gekennzeichnet, daß die Auskleidungssegmente (3) mittels metallischer Halzbleche (2), die eine Zwischenwand zwischen der metallischen Wandung (1) und der keramischen Auskleidung (3) bilden, nachgiebig und wärmeisoliert an der metallischen Wandung befestigt sind und über seitliche Öffnungen (5a) in den Luftführungseinsätzen (5) Kühlluft aus dem Raum zwischen der metallischen Wandung (1) und den Halzblechen (2) durch die Luftführungseinsätze (5) in dem Brennraum einleitbar ist.

2. Flammrohr nach Anspruch 1, dadurch gekennzeichnet, daß die Halzbleche (2) auf der den Auskleidungssegmenten (3) zugekehrten Seite reflektierend ausgebildet sind.

3. Flammrohr nach Anspruch 1 oder 2, dadurch gekennzeichnet, daß die Luftführungseinsätze (5) im Bereich der keramischen Auskleidung eine Isolationsschicht (10) aufweisen.

4. Flammrohr nach Anspruch 1 oder 2, dadurch gekennzeichnet, daß die Kühlung der Halzbleche (2) nach Art einer Prallkühlung ausgebildet ist.

5. Flammrohr nach Anspruch 1 oder 2, dadurch gekennzeichnet, daß die Kühlung der Halzbleche (2) nach Art einer Filmkühlung ausgebildet ist.

6. Flammrohr nach einem der vorhergehenden Ansprüche, dadurch gekennzeichnet, daß die Halzbleche (2) an der metallischen Wandung (1) lösbar befestigt sind.

7. Flammrohr nach einem der vorhergehenden Ansprüche, dadurch gekennzeichnet, daß die Auskleidungssegmente (3) an ihren axialen Enden kragenartige Ansätze aufweisen, mit denen sie im eingebauten Zustand aneinanderliegen, und daß jeweils im U-förmigen Querschnitt eines Kragens (3a) jeweils ein Ende eines Haltblechs (2) über eine Isolierzwischenlage (4) aufgenommen ist.

8. Flammrohr nach Anspruch 7, dadurch gekennzeichnet, daß die Zwischenlage (4) aus einer Zirkonoxydspritzschicht (g) besteht, die auf einem Streifen (2a) im Endbereich des Halteblechs (2), der mit einem Metallfilz (8) belegt ist, aufgebracht ist.

9. Flammrohr nach einem der vorhergehenden Ansprüche, dadurch gekennzeichnet, daß die Halzbleche (2) beidseitig durch Kühlluftströme gekühlt werden.

10. Flammrohr nach einem der vorhergehenden Ansprüche, dadurch gekennzeichnet, daß die keramische Auskleidung (3) aus gesintertem Siliciumkarbid oder gesintertem heißgepreßtem Siliciumnitrid besteht.

## Revendications

1. Tube de flammes, notamment pour chambres de combustion de turbines à gaz, comportant une paroi métallique formant enveloppe et un revêtement en matière céramique, constitué de segments, disposé à l'intérieur de l'enveloppe en ménageant un volume intermédiaire, ainsi que des garnitures de guidage d'air fixées sur la paroi métallique pour l'amenée radiale de l'air dans le tube de flammes, caractérisé en ce que les segments de revêtement (3) sont fixés de façon souple et avec un isolement thermique sur la paroi métallique au moyen de tôles de maintien métalliques (2) qui forment une paroi intermédiaire entre la paroi métallique (1) et le revêtement céramique (3), de l'air de refroidissement pouvant être introduit par les garnitures de guidage d'air (5) dans le volume de combustion, à partir du volume situé entre la paroi métallique (1) et les tôles de maintien (2), en passant par les ouvertures latérales (5a) des garnitures de guidage d'air (5).

2. Tube de flammes selon la revendication 1, caractérisé en ce que les tôles de maintien (2) sont constituées réfléchissantes du côté dirigé vers les segments de revêtement (3).

3. Tube de flammes selon la revendication 1 ou 2, caractérisé en ce que les garnitures de guidage d'air (5) comportent une couche isolante (10) dans la zone du revêtement céramique.

4. Tube de flammes selon la revendication 1 ou 2, caractérisé en ce que le refroidissement des tôles de maintien (2) est effectué à la manière d'un refroidissement par impact.

5. Tube de flammes selon la revendication 1 ou 2, caractérisé en ce que le refroidissement des tôles de maintien (2) est effectué à la manière d'un refroidissement par film.

6. Tube de flammes selon l'une des revendications précédentes, caractérisé en ce que les tôles de maintien (2) sont fixée de façon amovible sur la paroi métallique (1).

7. Tube de flammes selon l'une des revendications précédentes, caractérisé en ce que les segments de revêtement (3) comportent, à leurs extrémités axiales, des saillies en forme de collerettes par lesquelles ils viennent l'un contre l'autre à l'état monté, et en ce que dans chaque section en forme de U d'une collerette (3a) est logée une extrémité d'une tôle de maintien (2) avec interposition d'une tôle de maintien (2) avec interposition d'une couche intermédiaire isolante (4).

8. Tube de flammes selon la revendication 7, caractérisé en ce que la couche intermédiaire (4) est constituée d'une couche pulvérisée d'oxyde de zirconium (9), disposée sur une bande (2a) de la zone d'extrémité de la tôle de maintien (2) revêtue d'un feutre métallique (8).

9. Tube de flammes selon l'une des revendications précédentes, caractérisé en ce que les tôles de maintien (2) sont refroidies des deux côtés par des courants d'air de refroidissement.

10. Tube de flammes selon l'une des revendications précédentes, caractérisé en ce que le revêtement céramique (3) est constitué de carbure de silicium fritté ou de nitrure de siclicium fritté comprimé à chaud.

## Claims

1. Flame tube, in particular for gas turbine combustion chambers, having a mantle-type metal wall and a lining of ceramic material which is arranged inside it, leaving an interspace, and which is composed of segments, also having air circulation inserts attached to the metal wall for supplying air radially into the flame torch, characterised in that the lining segmets (3) are attached, flexibly and so as to be heat insulated, to the metal wall (1) by means of metal holding plates (2) which form a partition between the metal wall (1) and the ceramic lining (3), and cooling air can be introduced from the space between the metal wall (1) and the holding plates (2), through the air circulation inserts (5) in the combustion chamber, by way of side openings (5a) in the air circulation inserts (5).

2. Flame tube according to claim 1, characterised in that the side of the holding plates (2) which faces towards the lining segments (3), is designed to reflect.

3. Flame tube according to claim 1 or 2, characterised in that the air circulation inserts (5) have an insulating layer (10) in the area of the ceramic lining.

4. Flame tube according to claim 1 or 2, characterised in that the cooling of the holding plates (2) is designed in the manner of a deflection cooling.

5. Flame tube according to claim 1 or 2, characterised in that the cooling of the holding plates (2) is designed in the manner of a film cooling.

6. Flame tube according to one of the preceding claims, characterised in that the holding plates (2) are attached to the metal wall (1) in such a way that they can be detached.

7. Flame tube according to one of the preceding claims, characterised in that the lining segments (3) have collar-like projections on their axial ends, with which the lining segments (3) are located adjacently in the installed state, and that in each case one end of a holding plate (2) is held, by way of an insulating intermediate layer (4), in each U-shaped cross-section of a collar (3a).

8. Flame tube according to claim 7, characterised in that the intermediate layer (4) consists of a spray layer (9) of zirconium oxide which is applied on a strip (2a) in the area at the end of the holding plate (2), which strip is covered with a metal felt (8).

9. Flame tube according to one of the preceding claims, characterised in that the holding plates (2) are cooled on both sides by cooling air streams.

10. Flame tube according to one of the preceding claims, characterised in that the ceramic lining (3) consists of sintered silicon carbide or sintered, hot-pressed silicon nitride.

FIG. 1

EP 0 204 988 B1

FIG. 2

(II-II)

EP 0 204 988 B1

FIG. 3

EP 0 204 988 B1

FIG.6
(VI-VI)

FIG. 4

FIG. 5